# EUROPÄISCHE PATENTANMELDUNG

(11) **EP 1 083 351 A1**
(43) Veröffentlichungstag der Anmeldung: **14.03.2001**
(21) Anmeldenummer: 99810802.1
(22) Anmeldetag: 07.09.1999
(51) Int. Cl.: F16C 33/60, F16C 25/06

(54) **Kugellager und Verwendung desselben**

(71) Anmelder: Roulements Miniatures S.A., 2500 Biel (CH)
(72) Erfinder: Laager, Alain, 2603 Péry (CH)
(74) Vertreter: Liebetanz, Michael, Dipl.-Phys.

(57) **Zusammenfassung**

Ein Kugellager (1) verfügt über einen inneren Laufring (3) und einen äusseren Laufring (4, 8) und eine Vielzahl von Kugeln (2), die rollend zwischen dem inneren und dem äusseren Laufring liegen. Ein Laufring ist mindestens zweiteilig (4 und 8) und die beiden Teile (4 und 8) dieses Laufringes sind zueinander positionierbar (11), so dass der auf dem einen Teil (8) befindliche Auflagepunkt (14) jeder Kugel (2) gegenüber den anderen Auflagepunkten (6 und 9) einstellbar ist. Dabei weist ein erster Teil (4) des zweigeteilten Laufringes eine zu den Kugeln (2) hingewandte Zylindermantelfläche (11) auf, die die Verbindungsfläche (11) zwischen dem besagten ersten Teil (4) des zweigeteilten Laufringes und dem zweiten Teil (8) des zweigeteilten Laufringes bildet, wobei durch Verschieben der beiden Teile (4 bzw. 8) des zweigeteilten Laufringes gegeneinander das Lagerspiel einstellbar ist. Solche Kugellager sind insbesondere zum Einsatz für Hochgeschwindigkeitsanwendungen geeignet.

## Beschreibung

Die Erfindung betrifft ein Kugellager mit einem inneren Laufring und mit einem äusseren Laufring und mit einer Vielzahl von Kugeln, die rollend zwischen dem inneren und dem äusseren Laufring liegen, wobei ein Laufring mindestens zweiteilig ist und wobei die beiden Teile dieses Laufringes zueinander positionierbar sind, so dass der auf dem einen Teil befindliche Auflagepunkt jeder Kugel gegenüber den anderen Auflagepunkten einstellbar ist.

Ein solches Kugellager ist aus der CH 282 265 bekannt und wird seit über 40 Jahren in der Uhrenindustrie eingesetzt, wobei es sich jeweils um Lager von sehr kleinen Dimensionen handelt.

Aus dem Stand der Technik sind für Hochgeschwindigkeitsanwendungen weiterhin Kugellager als Sicherheitslager für Magnetlager wie aus der US 5,588,754, bekannt. Die DE 196 34 483 zeigt ein verbessertes Kugellager, mit dem das Problem des Erscheinens von Kugelspuren angegangen werden soll, insbesondere bei Kugellagern für Lenkstangen von Motorrädern. Doch die beschriebene Vorgehensweise, bei der sich die benachbarten Kugeln jeweils berühren, ist aufwendig.

Ausgehend von diesem Stand der Technik liegt der Erfindung die Aufgabe zugrunde, ein Lager für Hochgeschwindigkeitsanwendungen anzugeben, welches einfacher als die bekannten Magnetlager aufgebaut ist und eine höhere Standzeit aufweist.

Diese Aufgabe wird erfindungsgemäss durch ein Kugellager der eingangs genannten Art gelöst, dass ein erster Teil des zweigeteilten Laufringes eine zu den Kugeln hingewandte Zylindermantelfläche aufweist, die die Verbindungsfläche zwischen dem besagten ersten Teil des zweigeteilten Laufringes und dem zweiten Teil des zweigeteilten Laufringes bildet, wobei durch Verschieben der beiden Teile des zweigeteilten Laufringes gegeneinander das Lagerspiel einstellbar ist.

Dadurch, dass ein Laufring aus zwei ineinander gepressten Komponenten besteht, kann die Dreipunkt- oder die Vierpunktauflage des erfindungsgemässen Kugellagers genau justiert und eingestellt werden. Bei einer vorteilhaften Ausgestaltung besteht der äussere Laufring aus zwei Elementen, die an einer Zylindermantelfläche in einem Formschluss zusammenschiebbar sind. Vorzugsweise sind die beiden Elemente in einem Pressitz verbunden und/oder werden nach der Justage durch eine Laserschweissung verbunden, beispielsweise an sechs Punkten.

Weiterhin wird ein eingangs genanntes Kugellager für Hochgeschwindigkeitsanwendungen eingesetzt, insbesondere als Lager für Turbomolekularpumpen, ärztliche Werkzeuge, insbesondere zahnärztliche Werkzeuge, oder für Anwendungen in der Elektronik.

Weitere vorteilhafte Ausgestaltungen sind in den Unteransprüchen gekennzeichnet.

Im Anschluss werden Ausführungsbeispiele der Erfindung anhand der beigefügten Zeichnungen beispielhaft erläutert. Es zeigen:
- Fig. 1: ein Querschnittsansicht durch ein Kugellager in Höhe einer Kugel gemäss einem ersten Ausführungsbeispiel,
- Fig. 2: eine Seitenansicht auf ein Kugellager gemäss Fig. 1,
- Fig. 3: ein Querschnittsansicht durch ein Kugellager in Höhe einer Kugel gemäss einem zweiten Ausführungsbeispiel, und
- Fig. 4: eine Seitenansicht auf ein Kugellager gemäss Fig. 3.

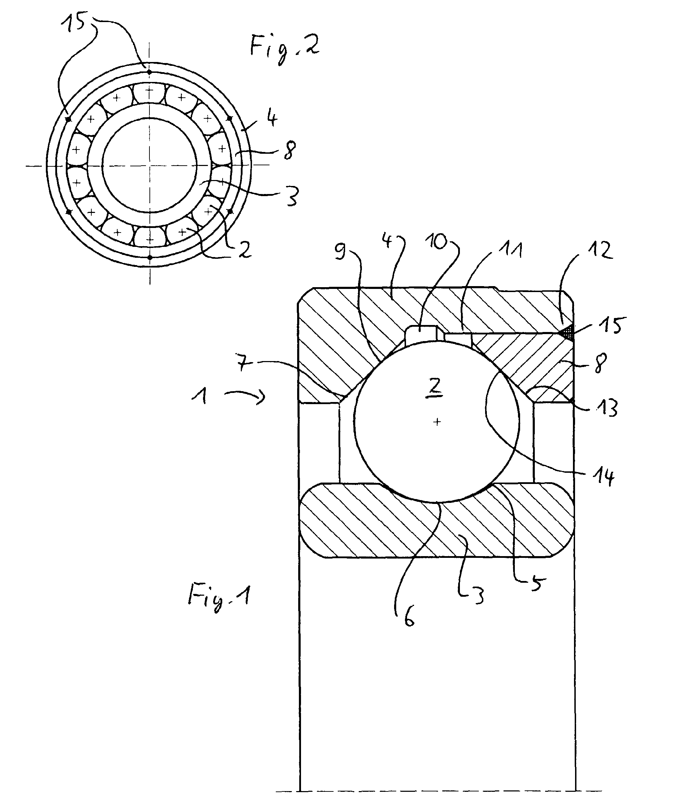

Die Fig. 1 zeigt eine Querschnittsansicht durch ein Kugellager 1 in Höhe einer Kugel 2 gemäss einem ersten Ausführungsbeispiel der Erfindung. Dieses Kugellager 1 ist für Hochgeschwindigkeitsanwendungen geeignet, wobei der Massstab der Fig. 1 20:1 vergrössernd betragen kann. Als solche Anwendungen können Lager für Turbomolekularpumpen betrachtet werden, insbesondere als Rotorlager, Lager für Elemente von zahnärztlichen Werkzeugen und Teilen von diesen wie dem Motor. Diese Hochgeschwindigkeitsanwendungen nutzen Lager, die gegenüber den Lagern des Standes der Technik gross sind. Diese Lager sind gegenüber den einstellbaren Lagern in der Uhrenindustrie räumlich viel grösser, beispielsweise um einen Faktor 5.

Das Kugellager 1 gemäss dem ersten Ausführungsbeispiel der Erfindung weist einen inneren Laufring 3 und einen äusseren Laufring 4 auf. Der innere Laufring 3 verfügt über eine konkave, den Aussenmantel eines negativen Torus bildende Lauffläche 5 für die Kugeln 2. Dabei ist der in der Querschnittsansicht der Fig. 1 zu erkennende Radius gleich gross oder vorteilhafterweise etwas grösser als der Durchmesser der Kugeln 2, so dass jede Kugel 2 im Querschnitt der Fig. 1 nur an einem Punkt 6 den inneren Laufring 3 berührt. Somit ergibt sich für die Gesamtheit der Ablaufbahn der Kugeln 2 ein Kreis an der tiefsten Stelle 6 des inneren Laufrings 3.

Der äussere Laufring 4 verfügt über eine im Querschnitt erste geneigte Fläche 7, auf deren im Querschnitt erscheinende Gerade die Kugel 2 an einem Kontaktpunkt 9 aufliegt. Der äussere Laufring 4 weist benachbart zu der Fläche 7 eine Nut 10 auf, an die sich eine innenzylindrische Fläche 11 anschliesst.

In die eine innenzylindrische Fläche 11 bildende Form ist ein Innenring 8 einschiebbar, der funktionell zum äusseren Laufring 4 gehört. Gegenüberliegend zur Fläche 7 ist die Fläche 13 des Innenringes 8 angeordnet. Hier liegt die Kugel 2 am Ort 14 auf der Fläche 13 auf, wenn vorteilhafterweise die Neigungen der Flächen 7 und 13 symmetrisch ausgestaltet sind.

Damit ergibt sich bei der in der Fig. 1 dargestellten Lage der Elemente 3, 4 und 8 eine Dreipunktauflage der Kugel 2 an den Punkten 6, 9 und 14 im Winkel von 120 Grad zueinander, wobei die Auflagepunkte 6 jeweils die innerste Auflagelinie der Kugeln 2 bilden und die Punkte 9 und 14 symmetrisch zueinander und zu der Auflagelinie liegen. Das axiale Spiel kann daher unter Verschiebung des Innenringes 8 genau eingestellt werden. Im Bereich 12 kann eine Laserschweissung vorgenommen werden, so dass über den Schweisspunkt 15 Innenring 8 und äusserer Laufring 4 verbindbar sind.

Die Fig. 2 zeigt, in etwas kleinerem Massstab wie beispielsweise 4:1, eine Seitenansicht auf ein Kugellager gemäss Fig. 1. Gleiche Merkmale sind in allen Zeichnungen mit gleichen Bezugszeichen versehen. Es ist leicht zu erkennen, dass die Kugel 2 jeweils aneinander angrenzen und ohne Käfig geführt sind. Es ist ferner zu erkennen, dass im dargestellten Ausführungsbeispiel sechs Schweisspunkte 15 in einem Winkelabstand von 60 Grad vorgesehen sind.

Als Material für die Laufringe und die Kugeln kommen insbesondere Chromstahl, Edelstahl, V2A-Stahl, Titanium oder Keramikwerkstoffe in Betracht. Als Einsatzgebiete eines solchen Kugellagers können Molekularpumpen mit magnetischer Lagerung vorgesehen sein, wobei es sich dann um Sicherheitskugellager handelt, die bei einem Versagen des Hauptlagers einsetzen. Das Kugellager kann auch als Rotorlager für solche Pumpen eingesetzt werden. In den Ausführungsbeispielen sind jeweils vierzehn Kugeln 2 bzw. 22 vorgesehen. Diese Anzahl kann je nach Grösse variieren.

Weiter kann dieses Kugellager auch im Dentalbereich für Handstücke und den Motor eingesetzt werden.

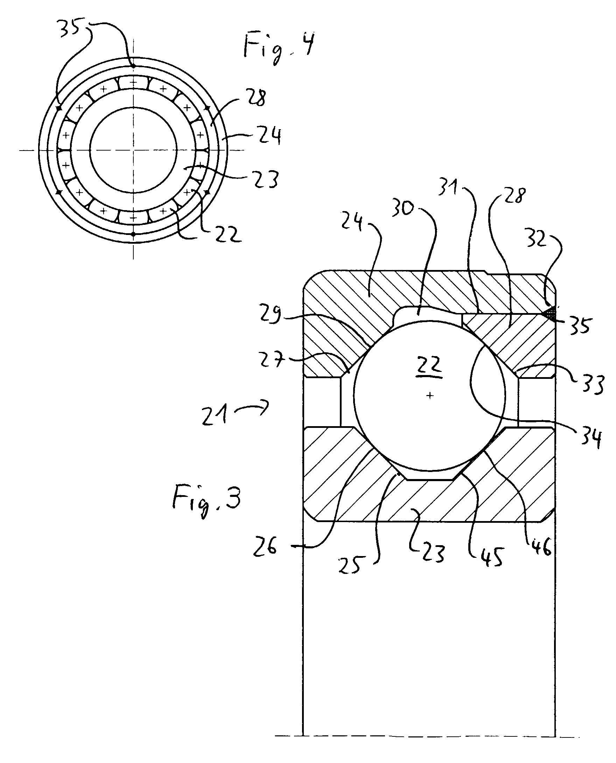

Die Fig. 3 zeigt eine Querschnittsansicht durch ein Kugellager 21 in Höhe einer Kugel 22 gemäss einem zweiten Ausführungsbeispiel der Erfindung. Dieses Kugellager 21 ist auch für miniaturisierte Anwendungen geeignet, z.B. kann der Massstab der Fig. 3 20:1 vergrössernd betragen. Das Kugellager 21 gemäss dem zweiten Ausführungsbeispiel der Erfindung weist einen inneren Laufring 23 und einen äusseren Laufring 24 auf.

Der innere Laufring 23 verfügt über zwei im Querschnitt gegenüberstehende geneigte Flächen 25 und 45, die eine konkave Struktur bilden, wobei die Kugeln 22 jeweils an zwei gegenüberliegenden Punkten 26 und 46 aufliegen.

Der äussere Laufring 24 verfügt über eine im Querschnitt erste geneigte Fläche 27, auf deren im Querschnitt erscheinende Gerade die Kugel 22 an einem Kontaktpunkt 29 aufliegt. Der äussere Laufring 24 weist benachbart zu der Fläche 27 eine Nut 30 auf, an die sich eine innenzylindrische Fläche 31 anschliesst.

In die eine innenzylindrische Fläche 31 bildende Form ist ein Innenring 28 einschiebbar, der funktionell zum äusseren Laufring 24 gehört. Gegenüberliegend zur Fläche 27 ist die Fläche 33 des Innenringes 28 angeordnet. Hier liegt die Kugel 22 am Ort 34 auf der Fläche 33 auf, wenn vorteilhafterweise die Neigungen der Flächen 27 und 33 symmetrisch ausgestaltet sind.

Damit ergibt sich bei der in der Fig. 3 dargestellten Lage der Elemente 23, 24 und 28 eine Vierpunktauflage der Kugel 22 an den Punkten 26, 46, 29 und 34. Das radiale oder axiale Spiel kann daher unter Verschiebung des Innenringes 28 genau eingestellt werden. Es kann eine Laserschweissung vorgenommen werden, so dass über den Pressitz hinaus durch den Schweisspunkt 35 Innenring 28 und äusserer Laufring 24 verbindbar sind.

Die Fig. 4 zeigt, in etwas kleinerem Massstab wie beispielsweise 4:1, eine Seitenansicht auf ein Kugellager gemäss Fig. 3. Auch hier sind die Kugeln 22 jeweils aneinander angrenzend und ohne Käfig geführt. Ferner sind auch im dargestellten Ausführungsbeispiel sechs Schweisspunkte 35 vorgesehen, Durch die Anordnung der Laserpunkte in diesem Winkelabstand von 60 Grad kann das Spiel in sehr genauer Weise eingestellt werden.

## Patentansprüche

1. Kugellager (1; 21) mit einem inneren Laufring (3; 23) und mit einem äusseren Laufring (4, 8; 24, 28) und mit einer Vielzahl von Kugeln (2; 22), die rollend zwischen dem inneren und dem äusseren Laufring liegen, wobei ein Laufring mindestens zweiteilig ist (4 und 8; 24 und 28) und wobei die beiden Teile (4 und 8; 24 und 28) dieses Laufringes zueinander positionierbar (11; 31) sind, so dass der auf dem einen Teil (8; 28) befindliche Auflagepunkt (14; 34) jeder Kugel (2; 22) gegenüber den anderen Auflagepunkten (6 und 9; 26, 46 und 29) einstellbar ist, **dadurch gekennzeichnet**, dass ein erster Teil (4, 24) des zweigeteilten Laufringes eine zu den Kugeln (2; 22) hingewandte Zylindermantelfläche (11; 31) aufweist, die die Verbindungsfläche (11; 31) zwischen dem besagten ersten Teil (4, 24) des zweigeteilten Laufringes und dem zweiten Teil (8, 28) des zweigeteilten Laufringes bildet, wobei durch Verschieben der beiden Teile (4, 24, bzw. 8, 28) des zweigeteilten Laufringes gegeneinander das Lagerspiel einstellbar ist.

2. Kugellager nach Anspruch 1, dadurch gekennzeichnet, dass der zweigeteilte Laufring der äussere Laufring (4 und 8; 24 und 28) ist.

3. Kugellager nach einem der Ansprüche 1 oder 2, dadurch gekennzeichnet, dass die Auflagepunkte auf dem zweigeteilten Laufring auf im Querschnitt einander zugeneigten Auflageflächen sind.

4. Kugellager nach Anspruch 3, dadurch gekennzeichnet, dass die Auflageflächen den gleichen Winkel bezüglich einer radialen Symmetrieachse des Kugellagers aufweisen.

5. Kugellager nach einem der Ansprüche 1 bis 4, dadurch gekennzeichnet, dass jede Kugel drei (6, 9, 14) Auflagepunkte aufweist, wobei der dem zweigeteilten Laufring gegenüberliegende Laufring eine Nut in Gestalt einer negativen Torusfläche (5) aufweist, die den Auflagepunkt (6) jeder Kugel (2) umfasst.

6. Kugellager nach einem der Ansprüche 1 bis 5, dadurch gekennzeichnet, dass jede Kugel vier (26, 46, 29, 34) Auflagepunkte aufweist, wobei der dem zweigeteilten Laufring gegenüberliegende Laufring eine Nut in Gestalt von zwei im Querschnitt einander zugeneigten Auflageflächen (25, 45) aufweist, die zwei Auflagepunkte (26, 46) jeder Kugel (2) umfassen.

7. Kugellager nach einem der Ansprüche 1 bis 6, dadurch gekennzeichnet, dass sich die Kugeln (2; 22) auf einem Rollkreis gegenseitig berühren.

8. Verwendung eines Kugellagers nach einem der Ansprüche 1 bis 7 für Hochgeschwindigkeitsanwendungen.

9. Verwendung eines Kugellagers nach einem der Ansprüche 1 bis 7 für Turbomolekularpumpen, ärztliche Werkzeuge, insbesondere zahnärztliche Werkzeuge, oder für Anwendungen in der Elektronik, insbesondere Automatisierungstechnik zur Halbleiterproduktion.
